# EUROPÄISCHE PATENTSCHRIFT

(11) **EP 1 738 604 B1**
(45) Veröffentlichungstag und Bekanntmachung des Hinweises auf die Patenterteilung: **14.10.2015**
(21) Anmeldenummer: 05731897.4
(22) Anmeldetag: 14.04.2005
(51) Int. Cl.: H04W 8/24, H04L 29/08

(54) **LADEN VON NUTZERINDIVIDUELL AUSGEWÄHLTEN ANWENDUNGSPROGRAMMEN IN MOBILE ENDGERÄTE**
LOADING APPLICATION PROGRAMS SPECIFICALLY SELECTED BY A USER IN MOBILE TERMINALS
CHARGEMENT DE PROGRAMMES D'APPLICATION SELECTIONNES INDIVIDUELLEMENT PAR L'UTILISATEUR DANS DES TERMINAUX MOBILES

(30) Priorität: 23.04.2004 DE 102004020395
(43) Veröffentlichungstag der Anmeldung: 03.01.2007
(73) Patentinhaber: Vodafone Holding GmbH, 40213 Düsseldorf (DE)
(72) Erfinder: WEBER, Elmar, Minato-ku,Tokyo 106-0032 (JP); STEPHENS, David, Berkshire RG17 9DZ (GB); AGUILERA, Maria, C.P. 28050 Madrid (ES)
(74) Vertreter: Weisbrodt, Bernd
(86) Internationale Anmeldenummer: PCT/EP2005/003903
(87) Internationale Veröffentlichungsnummer: WO 2005/104585

(56) Entgegenhaltungen:
- EP-A- 1 276 339
- EP-A- 1 331 543
- WO-A-02/13464
- WO-A-02/44892
- DE-A1- 19 610 840
- US-A1- 2004 075 675
- SCHLAPFER ET AL: "Mobile Applications with J2ME A White Paper" WHITE PAPER ERICSSON, 7. Juli 2001 (2001-07-07), Seiten 1-26, XP002223102

## Beschreibung

Die vorliegende Erfindung betrifft ein Verfahren zum Betreiben eines mobilen Endgerätes zur Nutzung in einem Mobilfunknetz, wobei das mobile Endgerät Speichermittel aufweist in die wenigstens ein Anwendungsprogramm zur Ausführung seitens des mobilen Endgerätes ladbar sind. Ein derartiges Verfahren ist beispielsweise aus der GB 2 380 901 A bekannt.

Bei den bisher im Stand der Technik bekannten Verfahren zum Betreiben eines mobilen Endgerätes zur Nutzung in einem Mobilfunknetz, beispielsweise dem aus der GB 2 380 901 A bekannten Verfahren, sind seitens des Speichers des mobilen Endgerätes fest vorgesehene Speicherbereiche für Anwendungsprogramme reserviert. Der Nutzer des mobilen Endgerätes kann lediglich auswählen, welches Anwendungsprogramm in welchen reservierten Speicherbereich geladen werden kann beziehungsweise über diesen zur Nutzung zugänglich sein soll.

Aus der DE 196 10 840 A1 ist ein Verfahren zum Laden von elektronischen Spielen auf ein mobiles Kommunikationsendgerät bekannt. Dabei wird vom Kommunikationsendgerät mittels eines über die Eingabeeinrichtung des Kommunikationsendgerätes gesteuerten Dialogs mit einer Steuereinrichtung zumindest ein Spiel ausgewählt. Die Auswahl des Spiels kann dabei über eine Übersicht erfolgen, die durch einen Serviceanbieter mittels einer Dienstesteuerungseinheit erfolgt. Das Spielprogramm wird über ein Mobilfunknetz zu dem mobilen Kommunikationsendgerät übertragen. Zur Übertragung der Daten kann eine zuvor aufgebaute Verbindung zwischen dem mobilen Kommunikationsendgerät und der Dienstesteuerungseinheit genutzt werden. Die übertragenen Daten werden auf dem mobilen Kommunikationsendgerät gespeichert.

Nachteilig bei den bisher bekannten Verfahren zum Betreiben eines mobilen Endgerätes zur Nutzung in einem Mobilfunknetz ist, dass eine nutzerindividualisierte Auswahl und Nutzung von Anwendungsprogrammen nicht beziehungsweise nur eingeschränkt ermöglicht wird.

Nachteilig ist ferner, dass die bisher bekannten Verfahren zum Betreiben eines mobilen Endgerätes zur Nutzung in einem Mobilfunknetz in der Regel nur eine gerätespezifische Nutzung, das heißt eine von dem mobilen Endgerät abhängige Nutzung, von Anwendungsprogrammen ermöglichen. Dementsprechend müssen seitens des Mobilfunknetzbetreibers und/oder einem das Anwendungsprogramm bereitstellenden Dienstanbieter jeweils verschiedene gerätespezifische Versionen eines Anwendungsprogramms bereitgehalten werden. Darüber hinaus ist es in der Regel erforderlich, die

Bedienung entsprechender Anwendungsprogramme gerätespezifisch an das jeweilige mobile Endgerät anzupassen. Dadurch variiert mitunter die Bedienung eines Anwendungsprogramms von mobilem Endgerät zu mobilem Endgerät, so dass die Bedienbarkeit für den Nutzer eines Anwendungsprogramms bei einem Wechsel des mobilen Endgerätes mitunter erschwert ist.

Darüber sind die mit bisher bekannten Verfahren zum Betreiben eines mobilen Endgerätes zur Nutzung in einem Mobilfunknetz nutzbaren Anwendungsprogramme im Hinblick auf deren Funktionalität und insbesondere deren Unterhaltungswert für den Nutzer beschränkt, insbesondere hinsichtlich der graphischen und/oder akustischen Möglichkeiten.

Der Erfindung liegt in Anbetracht dieses Standes der Technik die Aufgabe zugrunde, ein Verfahren zum Betreiben eines mobilen Endgerätes zur Nutzung in einem Mobilfunknetz, wobei das mobile Endgerät Speichermittel aufweist in die wenigstens ein Anwendungsprogramm zur Ausführung seitens des mobilen Endgerätes ladbar sind, bereitzustellen, mit welchem unter Meidung der beschriebenen Nachteile eine verbesserte und funktional umfangreichere Nutzung von Anwendungsprogrammen realisierbar ist, insbesondere hinsichtlich graphischer und/oder akustischer Nutzungsmöglichkeiten.

Diese Aufgabe wird gelöst durch den Gegenstand der Ansprüche 1 und 22.

Durch das erfindungsgemäße nutzerindividuell ausgewählte Laden des wenigstens einen Anwendungsprogramms in die Speichermittel des mobilen Endgerätes ist eine gegenüber den bisher bekannten Verfahren zum Betreiben eines mobilen Endgerätes zur Nutzung in einem Mobilfunknetz verbesserte und funktional umfangreichere Nutzung von Anwendungsprogrammen gegeben, insbesondere da der Nutzer Anwendungsprogramme entsprechend seiner spezifischen Interessen und/oder Vorlieben und/oder Eigenarten ausgewählt in die Speichermittel des mobilen Endgerätes laden und dementsprechend benutzen beziehungsweise anwenden kann.

Der Erfindung liegt die Erkenntnis zugrunde, dass durch Schaffung von die Individualität des Nutzer des mobilen Endgerätes unterstützenden Freiräumen hinsichtlich eines nutzerindividuell ausgewählten Ladens von Anwendungsprogrammen entsprechend dem erfindungsgemäßen Verfahren, die Anwendungsprogramme für den Nutzer des mobilen Endgerätes verbessert und funktional umfangreicher nutzbar sind. Dadurch wird die Nutzerzufriedenheit und dementsprechend der Umfang der Nutzung des mobilen Endgerätes erhöht.

In einer vorteilhaften Ausgestaltung der Erfindung wird das wenigstens eine Anwendungsprogramm über das Mobilfunknetz in die Speichermittel des mobilen Endgerätes geladen, vorteilhafterweise mittels eines Dienstes des Mobilfunknetzes vorzugsweise einem Multimedia-Mitteilungsdienst (MMS) oder einem Instant-Messaging-Mitteilungsdienst (IM).

In einer weiteren vorteilhaften Ausgestaltung der Erfindung ist die nutzerindividuelle Auswahl konfigurierbar, vorteilhafterweise hinsichtlich nutzerspezifischer und/oder für das mobile Endgerät spezifischer Informationen. Dadurch wird insbesondere das Maß der Individualisierbarkeit der Nutzung von Anwendungsprogrammen weiter erhöht. In einer bevorzugten Ausgestaltung der Erfindung ist die nutzerindividuelle Auswahl unter Berücksichtigung von Jugendschutzbestimmungen konfigurierbar.

Gemäß einem vorteilhaften Vorschlag der Erfindung ist die nutzerindividuelle Auswahl seitens des Mobilfunknetzbetreibers und/oder einem das Anwendungsprogramm bereitstellenden Dienstanbieter konfigurierbar. So kann der Mobilfunknetzbetreiber und/oder der Dienstanbieter die Nutzbarkeit von Anwendungsprogrammen in Abhängigkeit von nutzerspezifischen und/oder gerätespezifischen Eigenschaften konfigurieren, beispielsweise bestehenden unter Berücksichtigung von Jugendschutzbestimmungen, gerätespezifischen Funktionalitäten des mobilen Endgerätes, dem Kundenvertrags oder dergleichen.

Gemäß einem weiteren vorteilhaften Vorschlag der Erfindung ist die nutzerindividuelle Auswahl seitens des mobilen Endgerätes konfigurierbar. So kann der Nutzer die nutzerindividuelle Auswahl entsprechend seinen individuellen Bedürfnissen und/oder Vorlieben selbst konfigurieren. Vorteilhafterweise ist die Konfiguration mit einem Passwort oder dergleichen schützbar, so können Erziehungsberechtigte beispielsweise bestimmte Arten und/oder Nutzungen von Anwendungsprogrammen entsprechend den jeweiligen Jugendschutz-bestimmungen konfigurieren, insbesondere sperren beziehungsweise freigeben.

Vorteilhafterweise ist das wenigstens eine Anwendungsprogramm eine Multimedia-Anwendung, das heißt eine die Informationstypen beziehungsweise Medien Graphik, Text, Bild, Audio- und/oder Videoinformationen kombinierende Anwendung. Dadurch sind die Funktionalität und insbesondere deren Unterhaltungswert für den Nutzer weiter erhöht.

Das wenigstens eine Anwendungsprogramm ermöglicht vorteilhafterweise eine akustische Wiedergabe von Audioinformationen seitens des mobilen Endgerätes, vorzugsweise eine dreidimensionale akustische Wiedergabe, sogenannten 3D-Sound. So lassen sich Anwendungen mit einer realistischen Akustik, insbesondere akustische Reflektionen, Doppler-Effekten und dergleichen seitens der Anwendungsprogramme nutzen, vorteilhafterweise im Zusammenhang mit Audio- und/oder Videoinformationen sowie sogenannten Computerspielen. Dadurch ist der Unterhaltungswert entsprechender Anwendungsprogramme weiter steigerbar.

Gemäß einem weiteren Vorschlag der Erfindung ermöglicht das wenigstens eine Anwendungsprogramm eine optische Wiedergabe von Bildinformationen seitens des mobilen Endgerätes, vorzugsweise eine dreidimensionale optische Wiedergabe, sogenannte 3D-Graphik, besonders bevorzugt in mehrfarbiger und/oder bewegter Form.

In einer besonders vorteilhaften Ausgestaltung der Erfindung ist das wenigstens eine Anwendungsprogramm ein zur Unterhaltung des Benutzers dienendes Spiel, vorzugsweise ein Spiel mit ereignisgesteuerten Inhalten, beispielsweise ein sogenanntes "Action-Adventure", ein sogenannter "Ego-Shooter" oder dergleichen. Vorteilhafterweise ermöglicht das wenigstens eine Anwendungsprogramm über eine Verbindung, vorzugsweise eine drahtlose Verbindung, besonders bevorzugt mittels Bluetooth oder IrDA, des mobilen Endgerätes mit ereignissteuernden Einrichtungen, vorzugsweise einem Eingabegerät zur Steuerung von Spielen (Gamepad).

In einer weiteren vorteilhaften Ausgestaltung der Erfindung ist das wenigstens eine Anwendungsprogramm in einen Dienst des Mobilfunknetzes, vorzugsweise einem Multimedia-Mitteilungsdienst (MMS) oder einem Instant-Messaging-Mitteilungsdienst (IM), integrierbar.

Gemäß einem weiteren vorteilhaften Vorschlag der Erfindung ermöglicht das wenigstens eine Anwendungsprogramm eine Verwendung des mobilen Endgerätes als Mittel zur Zugriffs- und/oder Zugangsberechtigung, beispielsweise nach Art eines Schlüssels, eines Passwortes, einer Eintrittskarte oder dergleichen.

In einer weiteren vorteilhaften Ausgestaltung der Erfindung ermöglicht das wenigstens eine Anwendungsprogramm wenigstens teilweise eine Abwicklung von Transaktionen des Zahlungsverkehrs. So können Zahlungsvorgänge einem Nutzer vorteilhafterweise über den Mobilfunknetzbetreiber beispielsweise im Rahmen einer Rechnung, vorzugsweise der Mobilfunknetznutzungsrechnung des Nutzers, erfolgen.

Gemäß einer weiteren vorteilhaften Ausgestaltung der Erfindung ist das wenigstens eine Anwendungsprogramm als Mobilfunkteilnehmer-Identifikations-Modul-Anwendung (SAT (SIM Application Toolkit)) nutzbar. Dadurch lassen sich Anwendungsprogramme, vorteilhafterweise von dem Nutzer des mobilen Endgerätes selbst, als sogenannte SIM-Application direkt in die Bedieneroberfläche des mobilen Endgerätes integrieren. Das mobile Endgerät ist so noch weiter auf den Nutzer individualisierbar.

Das mobile Endgerät ist vorteilhafterweise ein Mobilfunktelefon und bevorzugt zur Ausführung des erfindungsgemäßen Verfahrens ausgebildet. Dazu weist insbesondere die Bedienerführung des mobilen Endgerätes ein entsprechendes Auswahlmenü beziehungsweise einen entsprechenden Menüpunk auf, welcher eine Auswahl und/oder Ausführung des nutzerindividuellen Ladens wenigstens eines Anwendungsprogramms in die Speichermittel des mobilen Endgerätes ermöglicht, vorteilhafterweise mit nur einer Taste oder dergleichen Eingabe, beispielsweise durch Sprachsteuerung oder dergleichen.

In einer weiteren Ausgestaltung der Erfindung ist das wenigstens eine Anwendungsprogramm in einer plattformunabhängigen objektorientierten Programmiersprache, vorteilhafterweise in JAVA, formuliert. Vorteilhafterweise ist das Anwendungsprogramm ein JAVA Midlet, ein JAVA Xlet oder dergleichen sonstige JAVA Applikation.

Weitere Einzelheiten, Merkmale und Vorteile der Erfindung werden nachfolgend anhand des in der Zeichnung dargestellten Ausführungsbeispiels näher erläutert. Dabei zeigt:

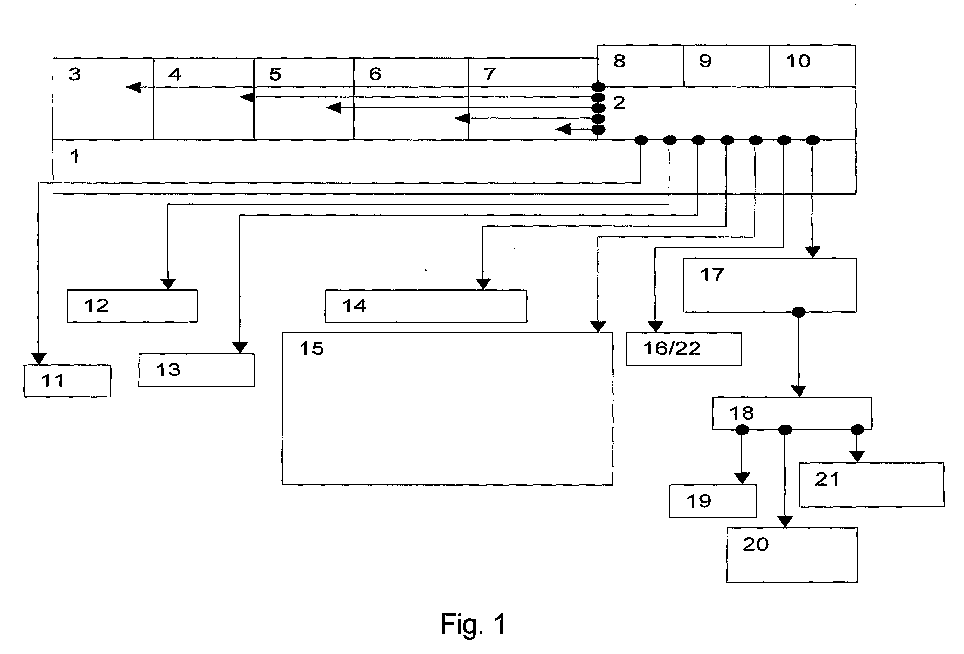

- Fig. 1: in einer schematischen Prinzipdarstellung ein Ausführungsbeispiel eines Aufbaus einer Anwendungsprogramms-Schnittstelle eines mobilen Endgerätes zur Nutzung des erfindungsgemäßen Verfahrens.

Fig. 1 zeigt den Aufbau einer Anwendungsprogramm-Schnittstelle (API Classification) eines mobilen Endgerätes, mit dem Betriebssystem 1 des mobilen Endgerätes (Terminal OS), einer virtuellen Maschine 2, vorliegend KVM einer Java Virtual Machine, seitens des mobilen Endgerätes fest vorgegebenen, über die virtuelle Maschine 2 auswählbare und nutzbare Anwendungen beziehungsweise Anwendungsprogrammen 3 bis 7 sowie 11 bis 17 und nutzerindividuell ausgewählt in die Speichermittel des mobilen Endgerätes ladbaren Anwendungsprogrammen 8 bis 10, welche über die virtuelle Maschine 2 auf die Anwendungen beziehungsweise Anwendungsprogramme 3 bis 7 sowie 11 bis 17 und/oder Ressourcen der Anwendungen beziehungsweise Anwendungsprogrammen 3 bis 7 sowie 11 bis 17 nutzend zurückgreifen können.

Die Anwendungen beziehungsweise Anwendungsprogramme 3 bis 7 umfassen Schnittstellen und Protokolle für einen Instant Messaging Services (IM)-Client 3, eine Kamera 4 des mobilen Endgerätes, einen Multimedia Messaging Services (MMS)-Client 5, eine Dateiverwaltung (File-Manager) 6 und einen Wireless Application Protocol (WAP)-Browser 7.

Die Anwendungen beziehungsweise Anwendungsprogramme 11 bis 17 umfassen Schnittstellen und Protokolle für das Mobilfunkteilnehmer-Identifikations-Modul (Subscriber Identification Module (SIM)) 11, das Dateisystem (File System) 12, Bluetooth 13, Spracheinstellungen (Language Settings) 14 des mobilen Endgerätes, geräte- und nutzerspezifische Informationen (Environment Knowledge) 15, Audioanwendungen im Synthetic Music Mobile Application Format (SMAF) 16 oder basierend auf Scalalable Polyphony - Musical Instrument Digital Interface (SP_MIDI) 22 und Netzwerkkommunikation 17.

Die geräte- und nutzerspezifischen Informationen (Environment Knowledge) 15 beinhalten beispielsweise Leistungsfähigkeit der Zentraleinheit (Central Processing Unit (CPU)) des mobilen Endgerätes, Status der Speichermittel des mobilen Endgerätes, die zur Verfügung stehende Bandbreite für Datenübertragung, die Mobilfunkteilnehmerkennung (IMSI) und/oder die Gerätekennung des mobilen Endgerätes (IMEI).

Die Netzwerkkommunikation 17 ermöglicht Netzdienste (Web-Services) 18, beispielsweise über das Internet, wie standortbezogene Dienste (Location Based Services (LBS)) 19, Gebührenabrechnungssysteme (Billing Systems) 20 zur Abwicklung von Transaktionen des Zahlungsverkehrs und den Zugang zu sogenannten Mehrspieler-Plattformen (Multiplayerplatform) 21 zum Spielen von Computerspielen mit mehreren sich an verschiedenen Orten befindenden Spielpartnern beziehungsweise -teilnehmern.

Das in der Figur der Zeichnung dargestellte Ausführungsbeispiel dient lediglich der Erläuterung der Erfindung und ist für diese nicht beschränkend.

### Bezugszeichenliste

- 1: Betriebssystem (mobiles Endgerät)
- 2: virtuelle Maschine
- 3: IM-Client
- 4: Kamera (mobiles Endgerät)
- 5: MMS-Client
- 6: Dateiverwaltung
- 7: WAP-Browser
- 8: Anwendungsprogramm
- 9: Anwendungsprogramm
- 10: Anwendungsprogramm
- 11: SIM (mobiles Endgerät)
- 12: Dateisystem (mobiles Endgerät)
- 13: Bluetooth
- 14: Spracheinstellung (mobiles Endgerät)
- 15: geräte- und nutzerspezifische Informationen
- 16: Synthetic Music Mobile Application Format (SMAF)
- 17: Netzwerkkommunikation
- 18: Netzdienste
- 19: Location Based Services (LBS)
- 20: Gebührenabrechnungssystem
- 21: Mehrspieler-Plattform
- 22: Scalalable Polyphony - Musical Instrument Digital Interface (SP-MIDI)

## Patentansprüche

1. Verfahren zum Betreiben eines mobilen Endgerätes zur Nutzung in einem Mobilfunknetz, wobei das mobile Endgerät Speichermittel aufweist in die wenigstens ein Anwendungsprogramm zur Ausführung seitens des mobilen Endgerätes ladbar sind und wobei ein Anwendungsprogramm in die Speichermittel des mobilen Endgerätes geladen wird,
**dadurch gekennzeichnet, dass**
das Speichermittel, in welches das Anwendungsprogramm geladen wird, nutzerindividuell ausgewählt wird.

2. Verfahren nach Anspruch 1, **dadurch gekennzeichnet, dass** das wenigstens eine Anwendungsprogramm über das Mobitfunknetz in die Speichermittel des mobilen Endgerätes geladen wird.

3. Verfahren nach Anspruch 1 oder Anspruch 2, **dadurch gekennzeichnet, dass** das wenigstens eine Anwendungsprogramm mittels eines Dienstes des Mobilfunknetzes in die Speichermittel des mobilen Endgerätes geladen wird.

4. Verfahren nach einem der Ansprüche 1 bis 3, **dadurch gekennzeichnet, dass** die nutzerindividuelle Auswahl konfigurierbar ist.

5. Verfahren nach Anspruch 4, **dadurch gekennzeichnet, dass** die nutzerindividuelle Auswahl hinsichtlich nutzerspezifischer und/oder für das mobile Endgerät spezifischer Informationen konfigurierbar ist.

6. Verfahren nach Anspruch 4 oder 5, **dadurch gekennzeichnet, dass** die nutzerindividuelle Auswahl unter Berücksichtigung von Jugendschutzbestimmungen konfigurierbar ist.

7. Verfahren nach einem der Ansprüche 4 bis 6, **dadurch gekennzeichnet, dass** die nutzerindividuelle Auswahl seitens des Mobilfunknetzbetreibers und/oder einem das Anwendungsprogramm bereitstellenden Dienstanbieter konfigurierbar ist.

8. Verfahren nach einem der Ansprüche 4 bis 6, **dadurch gekennzeichnet, dass** die nutzerindividuelle Auswahl seitens des mobilen Endgerätes konfigurierbar ist.

9. Verfahren nach einem der Ansprüche 1 bis 8, **dadurch gekennzeichnet, dass** das wenigstens eine Anwendungsprogramm eine Multimedia-Anwendung ist.

10. Verfahren nach einem der Ansprüche 1 bis 9, **dadurch gekennzeichnet, dass** das wenigstens eine Anwendungsprogramm eine akustische und/oder optische Wiedergabe von Audio- und/oder Bildinformationen seitens des mobilen Endgerätes ermöglicht.

11. Verfahren nach Anspruch 10, **dadurch gekennzeichnet, dass** das wenigstens eine Anwendungsprogramm eine dreidimensionale optische Wiedergabe, besonders bevorzugt in mehrfarbiger und/oder bewegter Form ermöglicht.

12. Verfahren nach einem der Ansprüche 1 bis 11, **dadurch gekennzeichnet, dass** das wenigstens eine Anwendungsprogramm in einen Dienst des Mobilfunknetzes integrierbar ist.

13. Verfahren nach einem der Ansprüche 1 bis 12, **dadurch gekennzeichnet, dass** das wenigstens eine Anwendungsprogramm ein zur Unterhaltung des Benutzers dienendes Spiel ist.

14. Verfahren nach Anspruch 13, **dadurch gekennzeichnet, dass** das wenigstens eine Anwendungsprogramm eine Verbindung und/oder eine drahtlose Verbindung des mobilen Endgerätes mit ereignissteuernden Einrichtungen ermöglicht.

15. Verfahren nach einem der Ansprüche 1 bis 14, **dadurch gekennzeichnet, dass** das wenigstens eine Anwendungsprogramm eine Verwendung des mobilen Endgerätes als Mittel zur Zugriffs- und/oder Zugangsberechtigung ermöglicht.

16. Verfahren nach einem der Ansprüche 1 bis 15, **dadurch gekennzeichnet, dass** das wenigstens eine Anwendungsprogramm wenigstens teilweise eine Abwicklung von Transaktionen des Zahlungsverkehrs ermöglicht.

17. Verfahren nach einem der Ansprüche 1 bis 16, **dadurch gekennzeichnet, dass** das wenigstens eine Anwendungsprogramm als Mobilfunkteilnehmer-Identifkations-Modul-Anwendung (SAT (SIM Application Toolkit)) nutzbar ist.

18. Verfahren nach einem der Ansprüche 1 bis 17, **dadurch gekennzeichnet, dass** das wenigstens eine Anwendungsprogramm in einer plattformunabhängigen objektorientierten Programmiersprache formuliert ist.

19. Verfahren nach Anspruch 18, **dadurch gekennzeichnet, dass** die Programmiersprache JAVA ist.

20. Verfahren nach Anspruch 18 oder Anspruch 19, **dadurch gekennzeichnet, dass** das Anwendungsprogramm ein JAVA Midlet, ein JAVA-Xlet oder dergleichen sonstige JAVA Applikation ist.

21. Verfahren nach einem der Ansprüche 1 bis 20, **dadurch gekennzeichnet, dass** das mobile Endgerät ein Mobilfunktelefon ist.

22. Mobiles Endgerät zur Nutzung in Mobilfunknetzen, **dadurch gekennzeichnet, dass** dieses zur Ausführung der seitens des Endgerätes auszuführenden Verfahrensschritte eines Verfahrens nach einem der Ansprüche 1 bis 21 ausgebildet und/oder eingerichtet ist.

23. Endgerät nach Anspruch 22, **dadurch gekennzeichnet, dass** dieses ein Mobilfunktelefon ist.

## Claims

1. A method for operating a mobile terminal for use in a mobile radio network, wherein the mobile terminal comprises storage means, into which at least one application program to be carried out by the mobile terminal can be loaded, and wherein an application program is loaded into the storage means of the mobile terminal,
**characterized in that**
the storage means, into which the application program is loaded, will be selected in a user individual manner.

2. A method according to claim 1, **characterized in that** the at least one application program will be loaded into the storage means of the mobile terminal via the mobile radio network.

3. A method according to claim1 or claim 2, **characterized in that** the at least one application program will be loaded into the storage means of the mobile terminal by means of a service of the mobile radio network.

4. A method according to one of the claims 1 to 3, **characterized in that** the user individual selection can be configured.

5. A method according to claim 4, **characterized in that** the user individual selection can be configured with respect to information which is specific for the user and/or for the mobile terminal.

6. A method according to claim 4 or 5, **characterized in that** the user individual selection can be configured in consideration of youth protection regulations.

7. A method according to one of the claims 4 to 6, **characterized in that** the user individual selection can be configured by the mobile radio network provider and/or by a service provider who provides the application program.

8. A method according to one of the claims 4 to 6, **characterized in that** the user individual selection can be configured by means of the mobile terminal.

9. A method according to one of the claims 1 to 8, **characterized in that** the at least one application program is a multimedia application.

10. A method according to one of the claims 1 to 9, **characterized in that** the at least one application program enables an acoustic and/or optical reproduction of audio and/or image information by means of the mobile terminal.

11. A method according to claim 10, **characterized in that** the at least one application program enables a three-dimensional optical reproduction, especially preferred in a multicoloured and/or animated form.

12. A method according to one of the claims 1 to 11, **characterized in that** the at least one application program can be integrated in a service of the mobile radio network.

13. A method according to one of the claims 1 to 12, **characterized in that** the at least one application program is a game which serves to entertain the user.

14. A method according to claim 13, **characterized in that** the at least one application program enables a connection and/or a wireless connection of the mobile terminal to event-controlling devices.

15. A method according to one of the claims 1 to 14, **characterized in that** the at least one application program enables a use of the mobile terminal as a means for the access authorization.

16. A method according to one of the claims 1 to 15, **characterized in that** the at least one application program at least partially enables to carry out payment transactions.

17. A method according to one of the claims 1 to 16, **characterized in that** the at least one application program can be used as subscriber identification module application (SAT (SIM Application Toolkit)).

18. A method according to one of the claims 1 to 17, **characterized in that** the at least one application program is formulated in a platform-independent, object-oriented programming language.

19. A method according to claim 18, **characterized in that** the programming language is JAVA.

20. A method according to claim 18 or claim 19, **characterized in that** the application program is a JAVA Midlet, a JAVA-Xlet or a like other JAVA application.

21. A method according to one of the claims 1 to 20, **characterized in that** the mobile terminal is a mobile phone.

22. A mobile terminal for use in mobile radio networks, **characterized in that** this one is configured and/or adapted to carry out the process steps to be carried out by the mobile terminal of a method according to one of the claims 1 through 21.

23. A terminal according to claim 22, **characterized in that** this one is a mobile phone.

## Revendications

1. Procédé de fonctionnement d'un terminal mobile utilisable dans un réseau radio mobile, dans lequel le terminal mobile comprend des moyens de mémorisation, dans lesquels on peut charger au moins un programme d'application à exécuter par le terminal mobile, et dans lequel un programme d'application est chargé dans les moyens de mémorisation du terminal mobile,
**caractérisé en ce que**
le moyen de mémorisation, dans lequel est chargé le programme d'application, est sélectionné de manière spécifique à l'utilisateur.

2. Procédé selon la revendication 1, **caractérisé en ce que** l'au moins un programme d'application est chargé dans les moyens de mémorisation du terminal mobile via le réseau radio mobile.

3. Procédé selon la revendication 1 ou la revendication 2, **caractérisé en ce que** l'au moins un programme d'application est chargé dans les moyens de mémorisation du terminal mobile par moyen d'un service du réseau radio mobile.

4. Procédé selon l'une des revendications 1 à 3, **caractérisé en ce que** la sélection spécifique à l'utilisateur est configurable.

5. Procédé selon la revendication 4, **caractérisé en ce que** la sélection spécifique à l'utilisateur est configurable par rapport à des informations spécifiques à l'utilisateur et/ou par rapport à des informations spécifiques au terminal mobile.

6. Procédé selon la revendication 4 ou la revendication 5, **caractérisé en ce que** la sélection spécifique à l'utilisateur est configurable en tenant compte des dispositions relatives à la protection de la jeunesse.

7. Procédé selon l'une des revendications 4 à 6, **caractérisé en ce que** la sélection spécifique à l'utilisateur est configurable par l'opérateur du réseau radio mobile et/ou par un fournisseur de services qui fournit le programme d'application.

8. Procédé selon l'une des revendications 4 à 6, **caractérisé en ce que** la sélection spécifique à l'utilisateur est configurable par moyen du terminal mobile.

9. Procédé selon l'une des revendications 1 à 8, **caractérisé en ce que** l'au moins un programme d'application est une application multimédia.

10. Procédé selon l'une des revendications 1 à 9, **caractérisé en ce que** l'au moins un programme d'application permet une reproduction acoustique et/ou optique des informations audio et/ou d'image par moyen du terminal mobile.

11. Procédé selon la revendication 10, **caractérisé en ce que** l'au moins un programme d'application permet une reproduction optique trois-dimensionnelle, de préférence particulière sous forme multicolore et/ou animée.

12. Procédé selon l'une des revendications 1 à 11, **caractérisé en ce que** l'au moins un programme d'application est susceptible d'être intégré dans un service du réseau radio mobile.

13. Procédé selon l'une des revendications 1 à 12, **caractérisé en ce que** l'au moins un programme d'application est un jeu servant à entretenir l'utilisateur.

14. Procédé selon la revendication 13, **caractérisé en ce que** l'au moins un programme d'application permet une liaison et/ou une connexion sans fil du terminal mobile avec des dispositifs commandant des événements.

15. Procédé selon l'une des revendications 1 à 14, **caractérisé en ce que** l'au moins un programme d'application permet une utilisation du terminal mobile en tant que moyen d'autorisation d'accès et/ou d'entrée.

16. Procédé selon l'une des revendications 1 à 15, **caractérisé en ce que** l'au moins un programme d'application permet d'effectuer au moins partiellement des transactions de paiement.

17. Procédé selon l'une des revendications 1 à 16, **caractérisé en ce que** l'au moins un programme d'application peut être utilisé en tant que application de module d'identification d'abonné (SAT (SIM Application Toolkit)).

18. Procédé selon l'une des revendications 1 à 17, **caractérisé en ce que** l'au moins un programme d'application est formulé dans un langage de programmation indépendante de plateforme et orientée objet.

19. Procédé selon la revendication 18, **caractérisé en ce que** le langage de programmation est JAVA.

20. Procédé selon la revendication 18 ou la revendication 19, **caractérisé en ce que** le programme d'application est un JAVA Midlet, un JAVA Xlet ou une autre application JAVA similaire.

21. Procédé selon l'une des revendications 1 à 20, **caractérisé en ce que** le terminal mobile est un téléphone mobile.

22. Terminal mobile destiné à l'utilisation dans des réseaux radio mobile, **caractérisé en ce que** celui-ci est configuré pour et/ou adapté à exécuter les étapes de procédé à exécuter par le terminal mobile d'un procédé selon l'une des revendications 1 à 21.

23. Terminal mobile selon la revendication 22, **caractérisé en ce que** celui-ci est un téléphone mobile.
